# DEMANDE DE BREVET EUROPEEN

(11) **EP 1 028 073 A1**
(43) Date de publication de la demande: **16.08.2000**
(21) Numéro de dépôt: 00400401.6
(22) Date de dépôt: 11.02.2000
(51) Int. Cl.: B65G 1/02, A47F 1/12

(54) **Châssis de stockage pour bonbonnes de liquide et notamment pour bonbonnes à eau**

(30) Priorité: 12.02.1999 FR 9901749
(71) Demandeur: M.A.J., 93500 Pantin (FR)
(72) Inventeur: Bernard, Philippe, 75116 Paris (FR); Robin, François, 75116 Paris (FR)
(74) Mandataire: Martin, Jean-Jacques

(57) **Abrégé**

L'invention concerne un châssis pour le stockage de bonbonnes (B) de liquide ayant des dimensions et un poids similaires à ceux d'une bonbonne pour fontaine à eau, comprenant au moins une rangée de barres (16a, 16b) parallèles et sensiblement horizontales espacées les unes des autres de façon à définir deux par deux des casiers dans lesquels les bonbonnes sont destinées à venir en appui par leurs flancs sur lesdites barres, caractérisé en ce qu'au moins deux casiers successifs comportent une barre d'appui commune (16b).

## Description

La présente invention concorne les châssis de stockage pour bonbonnes de liquide ayant un poids et des dimensions similaires à ceux des bonbonnes à eau pour fontaines collectives.

De tels châssis, également appelés racks par l'homme du métier, sont utilisés pour le rangement et le stockage de bonbonnes d'eau destinées à des fontaines disposées par exemple dans des lieux publics, des bureaux, etc.. Ces châssis sont notamment destinés à être chargés dans des camions pour permettre la livraison des bonbonnes.

Comme on l'aura compris, ces racks doivent pouvoir être chargés ou déchargés aisément en bonbonnes tout en fournissant un maintien stable, notamment vis-à-vis d'éventuelles secousses, et en présentant une rigidité suffisante pour pouvoir par exemple être empilés les uns sur les autres. Lorsqu'ils sont placés dans un camion, ils doivent permettre à un livreur d'extraire ou d'engager facilement une bonbonne.

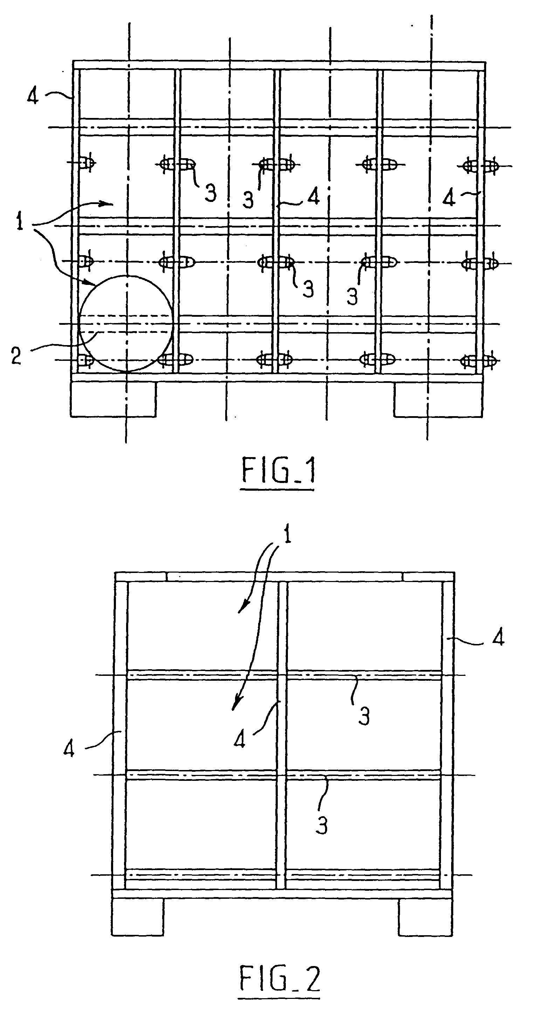

On a représenté aux figures 1 et 2 un rack de l'art antérieur. Il présente une forme générale de parallélépipède et comporte plusieurs rangées de casiers 1 juxtaposés, qui sont destinés à recevoir les bonbonnes 2. Chaque casier 1 est notamment défini par deux barreaux 3 parallèles horizontaux, dont l'écartement est légèrement inférieur au diamètre d'une bonbonne 2 et dont la longueur est sensiblement égale à celle d'une ou plusieurs bonbonnes 2. On range une bonbonne 2 en la faisant glisser longitudinalement entre deux barreaux 3 d'un même casier 1, la bonbonne 2 prenant appui par ses flancs sur ces barreaux 3.

Ces barreaux d'appui 3 sont soudés sur des montants 4 verticaux qui s'étendent entre les casiers 1, dans la hauteur du rack.

Toutefois, un tel châssis - qui est principalement utilisé en Amérique du Nord - s'avère être d'un encombrement important, ainsi que d'un poids peu satisfaisant. Il s'avère également d'une réalisation coûteuse.

On a également proposé, dans le document US 2 649 207, un présentoir composé lui aussi d'une série de traverses d'appui.

Dans le cas de ce présentoir, les traverses d'appui sont disposées pour que les articles présentés viennent au contact de part et d'autre de chacune d'entre-elles.

Dans un tel présentoir, les traverses ont essentiellement un rôle de guidage des produits vers le client. Les produits sont guidés en glissement vers des éléments de blocage à l'avant du présentoir, qui portent en partie le poids des produits. Les traverses proposées sont d'ailleurs constituées de feuilles métalliques mises en forme selon un profilé de forme assez complexe dans le but d'améliorer le guidage.

Les traverses ne sont en outre quasiment pas sollicitées mécaniquement par les produits présentés, qui sont de poids négligeable (tout au plus des boîtes de conserve, ou des bouteilles standard).

Une telle structure de présentoir ne répond pas aux attentes des professionnels du stockage et du transport de produits lourds comme des bonbonnes pour fontaines collectives.

Un but de l'invention est de proposer un rack ou châssis de stockage pour bonbonnes de liquide, et plus particulièrement pour bonbonnes à eau, qui est d'une plus grande compacité et d'une meilleure stabilité, qui est d'un faible poids et dont la fabrication est peu onéreuse.

Ce but est atteint selon l'invention grâce à un châssis pour le stockage de bonbonnes de liquide ayant des dimensions et un poids similaires à ceux d'une bonbonne pour fontaine à eau, comprenant au moins une rangée de barres parallèles et sensiblement horizontales espacées les unes des autres de façon à définir deux par deux des casiers dans lesquels les bonbonnes sont destinées à venir en appui par leurs flancs sur lesdites barres, caractérisé en ce qu'au moins deux casiers successifs comportent une barre d'appui commune.

Une telle structure de châssis est avantageusement complétée par le fait que l'entraxe entre ladite barre d'appui commune et les deux barres d'appui de part et d'autre de celle-ci est égal ou légèrement supérieur au diamètre d'une bonbonne.

Comme on l'aura compris, le fait d'utiliser une barre d'appui commune pour deux casiers successifs permet un gain de matière important et simplifie la réalisation du châssis.

En outre, l'utilisation d'un entraxe entre la barre d'appui égal ou légèrement supérieur au diamètre des bonbonnes permet d'optimiser l'encombrement en largeur du châssis.

Par rapport au châssis représenté sur les figures 1 et 2, on gagne en encombrement le volume entre les barres d'appui de deux casiers successifs, qui était notamment nécessaire pour loger les montants verticaux.

D'autres caractéristiques, buts et avantages de la présente invention apparaîtront à la lecture de la description détaillée qui va suivre, faite en référence aux figures annexées sur lesquelles:
- la figure 1 est une vue de face d'un rack pour bonbonnes à eau conforme à un état de la technique connu;
- la figure 2 est une vue de côté du même rack;
- la figure 3 est une vue de face d'un rack conforme à un mode de réalisation possible de l'invention, représenté avec ses bonbonnes d'eau;
- la figure 4 est une vue en coupe selon la ligne IV-IV de la figure 3;
- la figure 5 est une vue de côté du même rack, à l'état vide;
- la figure 6 est une vue de dessus du même rack, à l'état vide;
- la figure 7 est une vue en coupe selon la ligne VII-VII de la figure 3.

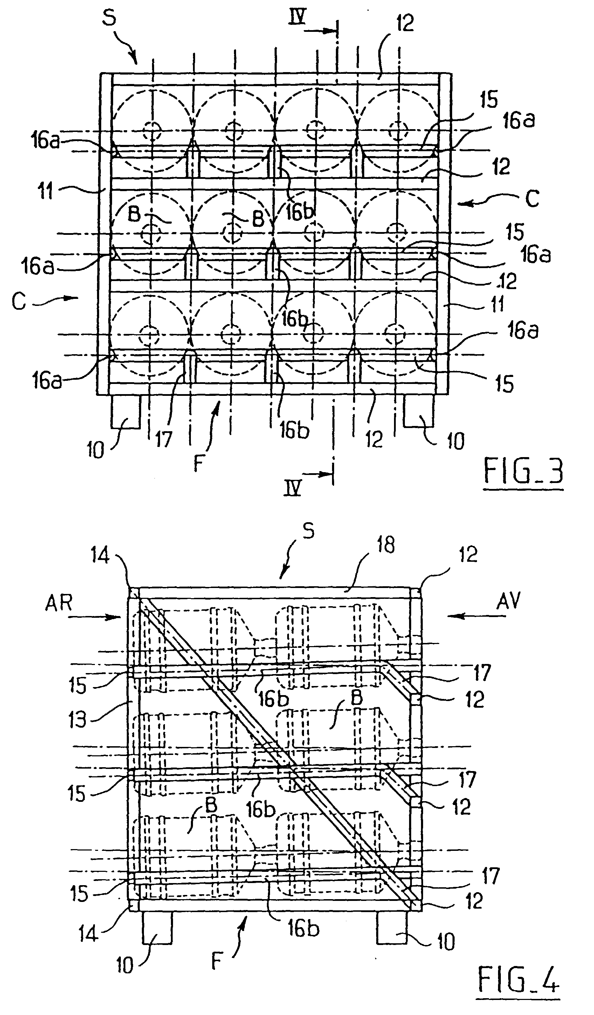

Le rack de stockage des figures 3 à 6 est porté par quatre pieds 10 et présente une armature externe de forme générale parallélépipèdique, qui définit pour le rack un fond F, une partie supérieure S, une partie avant AV, une partie arrière AR et deux côtés C.

Dans tout le présent texte, les termes "avant" et "arrière" doivent être compris par rapport au sens d'introduction des bonbonnes dans le rack, la partie "avant' étant la partie par laquelle on introduit une bonbonne. Les termes "inférieur', "supérieur', "horizontal", "vertical" doivent être compris par rapport à la position normale du rack, c'est à dire par rapport à la position qu'il prend lorsque ses pieds portent sur un plan horizontal.

A l'avant, le rack comporte deux longerons verticaux 11, ainsi que quatre longerons 12 horizontaux parallèles qui s'étendent chacun entre l'un et l'autre des deux longerons verticaux 11. L'un de ces longerons 12 horizontaux s'étend au niveau du fond du rack, un autre s'étendant au niveau de sa partie supérieure, les deux autres étant disposés respectivement au tiers et aux deux tiers de la structure portée par les pieds.

A l'arrière, le rack comporte deux longerons verticaux 13, ainsi que deux longerons horizontaux parallèles 14. Ces longerons horizontaux 14 s'étendent entre les deux longerons verticaux 13 en étant disposés l'un au niveau du fond du rack, l'autre au niveau de sa partie supérieure. Le rack présente également trois traverses arrière horizontales 15 parallèles aux longerons et réparties dans la hauteur dudit rack. L'espacement entre deux traverses 15 successives est identique à l'espacement entre deux longerons avant 12 successifs. La traverse 15 inférieure est disposée au voisinage du fond du rack et est légèrement décalée vers le haut par rapport à celui-ci.

En son intérieur, le rack présente trois rangées de barres d'appui 16a, 16b qui sont destinées à supporter les bonbonnes et qui s'étendent entre sa partie avant et sa partie arrière.

Dans l'exemple représenté sur les figures, chaque rangée comporte cinq barres d'appui 16a, 16b, dont deux barres latérales 16a qui s'étendent le long des côtés du rack et trois barres centrales 16b. La profondeur des barres d'appui 16a, 16b est égale à deux fois la hauteur d'une bonbonne B.

Les barres centrales 16b s'étendent entre les traverses arrière 15 et les longerons avant 12. Notamment, les barres centrales 16b de la rangée inférieure s'étendent entre la traverse arrière 15 inférieure et le longeron avant 12 qui est situé au niveau du fond du rack. Les barres centrales des deux autres rangées s'étendent de la même façon entre les traverses médianes arrière et les longerons médians avant.

Chaque barre centrale 16b est une barre creuse consistant en un profilé tubulaire cylindrique qui s'étend de façon droite sur une majeure partie de sa longueur et qui se termine, à son extrémité au voisinage du longeron avant 12 sur lequel elle prend appui, par une portion 17 qui est inclinée par rapport au reste de ladite barre. Les portions inclinées 17 des barres centrales 16b définissent à l'avant du rack des rampes destinées à faciliter l'introduction des bonbonnes.

Les barres d'appui latérales 16a sont également des barres creuses tubulaires cylindriques. Elles s'étendent de façon droite sur toute leur longueur et sont parallèles aux parties principales des barres centrales 16b. Ces barres latérales 16a sont légèrement en saillie vers l'intérieur du rack par rapport aux longerons verticaux 11 et 13 qui les portent.

On notera que les barres latérales 16a et les parties principales des barres centrales 16b sont légèrement en pente par rapport à l'horizontale. Elles présentent en effet, de l'avant vers l'arrière du rack, une légère inclinaison vers le bas qui contribue à stabiliser les bonbonnes lorsqu'elles sont en place dans le rack.

Comme on peut le voir sur la figure 3, l'entraxe entre deux barres 16a, 16b successives d'une même rangée est égal au diamètre externe d'une bonbonne (ou plus exactement légèrement supérieur à celui-ci de façon à permettre un léger jeu entre les bonbonnes lorsqu'elles sont sur le rack).

Ainsi, une bonbonne B glissée entre deux barres 16a, 16b d'une même rangée est maintenue dans le rack par appui de ses flancs sur ces deux barres 16a, 16b.

Les barres 16a, 16b sont choisies d'une section suffisamment importante pour permettre cet appui et ne pas se déformer sous le poids des bonbonnes B.

On notera qu'avec cette disposition, chaque barre centrale 16b est commune à deux casiers d'une même rangée : elle est destinée à servir d'appui pour les bonbonnes B glissées d'un côté et de l'autre de ladite barre 16b.

Le nombre de barres d'appui est donc plus réduit que dans le dispositif illustré sur les figures 1 et 2.

En outre, avec une telle disposition, les bonbonnes B juxtaposées dans une même rangée du rack sont juste affleurantes les unes par rapport aux autres, de sorte que l'espace entre deux bonbonnes B successives est minimisé.

Par conséquent, l'encombrement du rack en largeur est optimal.

Avantageusement, on munit les barres 16a et 16b de gaines, par exemple en PVC, qui facilitent le glissement des bonbonnes le long desdites barres.

Pour permettre d'enfiler ces gaines sur lesdites barres 16a et 16b, celles-ci sont avantageusement rivetées sur les traverses arrière 15, au lieu d'être soudées sur celles-ci.

On notera que la fixation par rivetage des barres 16a et 16b sur les traverses arrière 15 est rendue possible grâce au fait que lesdites barres 16a et 16b s'étendent de façon droite à leur extrémité arrières, contrairement aux dispositifs de l'état de la technique décrits en référence aux figures 1 et 2 dont les barres d'appui sont coudées à leur extrémité arrière en direction d'un montant vertical de fixation sur lequel elles sont soudées. Les rivets peuvent avantageusement être utilisés pour fixer lesdites gaines sur les barres d'appui.

Bien entendu, on peut également prévoir de disposer des gaines sur les barres d'appui même dans le cas où les barres d'appui sont soudées sur les parties arrière et avant de l'armature du rack. On utilise par exemple à cet effet des gaines qui sont ouvertes dans leur longueur.

Le nombre de barres d'appui du rack selon l'invention étant réduit par rapport au nombre de barres d'appui des racks de l'état de la technique, le nombre de gaines s'en trouve également réduit. Ainsi, on utilise ici seulement quinze gaines contre vingt-quatre pour le rack représenté à la figure 1.

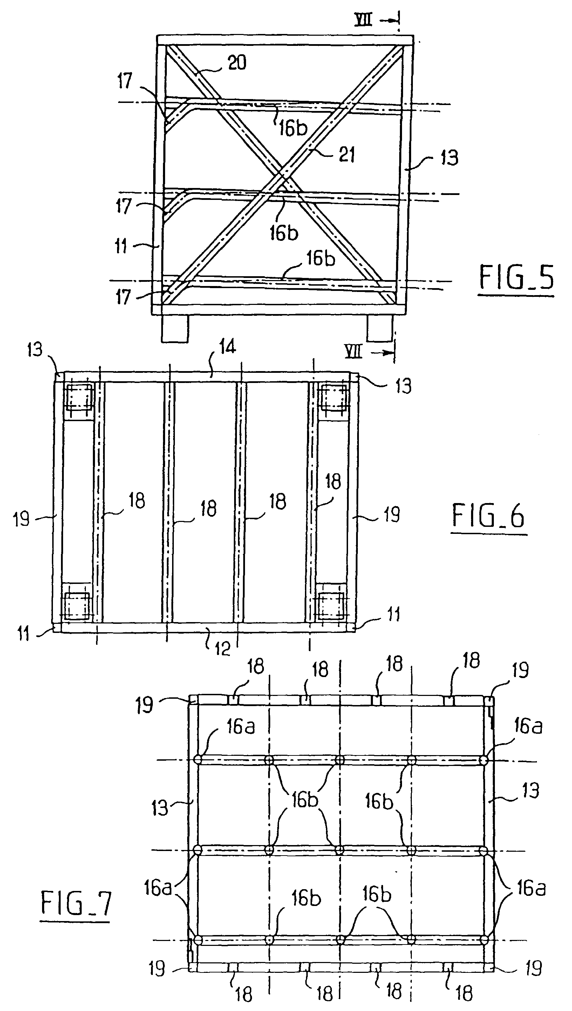

Par ailleurs, en sa partie supérieure, le rack est fermé par quatre longerons 18 (figures 6, 7) qui s'étendent entre l'avant et l'arrière dudit rack, en étant disposés entre deux longerons latéraux 19, et qui sont parallèles aux barres d'appui 16a, 16b. Ces quatre longerons 18 sont décalés d'un demi entraxe par rapport aux barres d'appui 16a, 16b et se trouvent chacun au droit du milieu d'un casier défini par deux barres d'appui 16a, 16b successives.

Ainsi, outre qu'ils contribuent à rigidifier l'armature du rack, ces longerons 18 permettent de réaliser une certaine protection pour les bonbonnes B disposées dans la rangée supérieure du rack, qui sinon pourraient être exposées à des détériorations.

Le fond du rack est constitué de longerons 18, 19 qui sont disposés de la même façon que ceux de la partie supérieure. Les bonbonnes sont ainsi protégées des fourches de préhension de chariots élévateurs.

Sur ses côtés, l'armature du rack est définie par les longerons latéraux verticaux 11, 13 et horizontaux 19. De chaque côté, un montant incliné 20, 21 s'étend d'un coin à un autre du carré défini par lesdits longerons horizontaux et verticaux 11, 13 et 19. Plus précisément, le montant 20 s'étend entre un coin haut avant et un coin bas arrière du rack, tandis que le montant 21 s'étend entre un coin bas avant et un coin haut arrière du rack.

En outre, la partie arrière du rack est avantageusement renforcée par une croix de Saint André (non représentée) qui rigidifie le châssis pour permettre un empilage des châssis les uns sur les autres.

Les longerons, traverses, barres et montants de la structure qui vient d'être décrite sont en acier galvanisé et sont fixés les uns sur les autres par soudure (à l'exception, déjà évoquée, des extrémités arrière des barres 16a, 16b qui peuvent être rivetées sur les traverses 15).

On notera que les longerons avant 12 qui s'étendent le long des côtés du rack peuvent être utilisés par un opérateur manipulant les bonbonnes comme des barreaux d'échelle sur lesquels il peut prendre appui pour atteindre par exemple les casiers supérieurs du rack. Il en est de même pour les barres 16a.

Par ailleurs, pour retirer du rack une bonbonne rangée au fond de celui-ci, c'est à dire vers sa partie arrière, on utilise avantageusement un outil constitué d'un tube creux qu'il est possible d'emboîter sur le goulot des bonbonnes. Ce tube creux est solidaire d'une structure qui porte des galets de guidage qui sont répartis de part et d'autre dudit tube et qui sont destinés à prendre appui en coulissement sur les barres 16a, 16b.

Cet outil est en outre muni en sa partie avant d'un élément de maintien inférieur destiné à être engagé sous les bonbonnes pour les soutenir.

Un tel outil s'utilise de la façon suivante. On le fait coulisser dans un casier, en prenant appui sur les barres 16a et/ou 16b de celui-ci. L'avant de son tube est enfoncé sur le goulot de la bonbonne. Le tube est alors utilisé comme levier pour, avec l'élément de maintien inférieur, soulever la bonbonne en appuyant sur le tube vers le bas. On désengage la bonbonne par rapport aux barres et on ramène la bonbonne vers l'avant en la faisant coulisser sur les galets. Lorsque les galets arrivent au niveau des portions inclinées 17, on pose la bonbonne sur ces portions 17. Elle se trouve alors dans une position qui lui permet de la soulever aisément.

Plusieurs outils de ce type peuvent par exemple être montés en parallèle sur la fourche d'un élévateur pour permettre d'aller chercher simultanément plusieurs bonbonnes disposées dans différents casiers d'un même étage.

Avantageusement, le rack est muni d'une étiquette électronique, sous forme d'un transpondeur à mémoire qui contient un code d'identification du rack et qui permet de tracer les bonbonnes avant leur livraison.

Le rack décrit ici est destiné à des bonbonnes à eau pour fontaines collectives. Toutefois un rack de même nature peut être utilisé pour d'autres bonbonnes telles que des bonbonnes de vin. On utilise plus généralement les avantages principaux d'un tel rack pour le stockage et le transport de bonbonnes ayant des tailles et des poids similaires à ceux des bonbonnes à eau ( typiquement une trentaine de centimètres de diamètre, une cinquantaine de centimètres de haut, et un poids d'environ vingt kilos).

Un tel rack convient notamment pour le transport de tels produits lourds malgré les contraintes dynamiques particulièrement élevées qui apparaissent alors.

## Revendications

1. Châssis pour le stockage de bonbonnes (B) de liquide ayant des dimensions et un poids similaires à ceux d'une bonbonne pour fontaine à eau, comprenant au moins une rangée de barres (16a, 16b) parallèles et sensiblement horizontales espacées les unes des autres de façon à définir deux par deux des casiers dans lesquels les bonbonnes sont destinées à venir en appui par leurs flancs sur lesdites barres, caractérisé en ce qu'au moins deux casiers successifs comportent une barre d'appui commune (16b).

2. Châssis selon la revendication 1, caractérisé en ce que l'entraxe entre ladite barre d'appui commune (16b) et les deux barres d'appui (16a, 16b) de part et d'autre de celle-ci est égal ou légèrement supérieur au diamètre d'une bonbonne (B).

3. Châssis selon l'une des revendications précédentes, caractérisé en ce qu'une barre d'appui commune (16b) se termine à l'avant par une rampe inclinée (17).

4. Châssis selon l'une des revendications précédentes, caractérisé en ce qu'une barre d'appui (16a, 16b) est, de l'avant vers l'arrière, en pente vers le bas par rapport à l'horizontal.

5. Châssis selon l'une des revendications précédentes, caractérisé en ce qu'une barre d'appui (16a, 16b) est revêtue d'une gaine destinée à faciliter le glissement des bonbonnes le long desdites barres.

6. Châssis selon l'une des revendications précédentes, caractérisé en ce qu'une barre d'appui est fixée par rivetage sur une partie d'armature de l'arrière du châssis.

7. Châssis selon la revendication 6, caractérisé en ce qu'une barre d'appui (16a, 16b) s'étend de façon droite à l'arrière dudit châssis et au moins sur une majeure partie de sa longueur.

8. Châssis selon l'une des revendications précédentes, caractérisé en ce qu'une rangée comporte quatre casiers définis par trois barres d'appui (16b) chacune commune à deux casiers successifs et deux barres d'appui latérales (16a).

9. Châssis selon l'une des revendications précédentes, caractérisé en ce qu'une barre d'appui commune (16b) est fixée, à l'avant et à l'arrière, sur des éléments horizontaux (12, 15) qui s'étendent sur toute la largeur dudit châssis.

10. Châssis selon l'une des revendications précédentes, caractérisé en ce qu'il comporte en sa partie inférieure et sa partie supérieure des éléments horizontaux (18) qui s'étendent parallèlement aux barres d'appui, au droit du milieu de deux casiers successifs, sur toute la profondeur du châssis.

11. Châssis selon l'une quelconque des revendications précédentes, caractérisé en ce que les barres d'appui sont des profilés tubulaires cylindriques.

12. Châssis selon l'une des revendications précédentes, caractérisé en ce que les barres d'appui sont de section circulaire.

13. Châssis selon l'une des revendications précédentes, caractérisé en ce que sa partie arrière est renforcée par des montants formant une croix de Saint André.

14. Ensemble caractérisé en ce qu'il comporte un châssis selon l'une des revendications précédentes, ainsi qu'un tube creux permettant de manipuler les bonbonnes par leur goulot, ce tube creux étant solidaire d'une part d'une structure qui porte des galets de guidage qui sont répartis de part et d'autre du tube et qui sont destinés à prendre appui en coulissement sur les barres d'appui (16a, 16b) et d'autre part d'un élément de maintien inférieur destiné à être engagé sous les bonbonnes pour les soutenir.
